# EUROPEAN PATENT APPLICATION

(11) **EP 3 533 628 A1**
(43) Date of publication of application: **04.09.2019**
(21) Application number: 17863999.3
(22) Date of filing: 08.06.2017
(51) Int. Cl.: B60C 11/16

(54) **STUD PIN, AND PNEUMATIC TIRE PROVIDED WITH STUD PIN**

(30) Priority: 26.10.2016 JP 2016209207
(71) Applicant: TOYO TIRE CORPORATION, Itami-shi, Hyogo 6640847 (JP)
(72) Inventor: ASAYAMA, Yoshinori, Hyogo 664-0847 (JP)
(74) Representative: Eisenführ Speiser
(86) International application number: PCT/JP2017/021237
(87) International publication number: WO 2018/078941

(57) **Abstract**

Provided is a stud pin to be mounted in a pin hole 26 of a pneumatic tire. The stud pin includes: a body 2 which is cylindrical and is constituted by an edge 8a, whose at least one end of a center axis direction extends in parallel to a straight line perpendicular a center axis, and an arc-shaped part 8b centered on the center axis; and a base 4 arranged on the other end of the center axis direction of the body 2, which base 4 includes a linear part 9 extending in parallel to the edge 8a on the outer periphery and is formed asymmetrically about a transverse axis perpendicular to the center axis. The edge 8a and the linear part 9 are arranged perpendicular to a circumferential direction of the pneumatic tire.

## Description

### TECHNICAL FIELD

The present invention relates to a stud pin, and a pneumatic tire comprising the stud pin.

### BACKGROUND ART

Conventionally, as a stud pin, one having a constitution that includes a body which has a trapezoidal shape in a plan view and a base which is arranged on the lower end of the base and similarly has a trapezoidal shape in a plan view is known (see Patent Literature 1).

### CITATION LIST

### PATENT LITERATURE

Patent Literature 1: WO 2014/122570 A1

### SUMMARY OF INVENTION

### TECHNICAL PROBLEM

However, in the above-described conventional stud pin, the distances between the center axis of the base and two sides are substantially equal. In addition, since the body also has a trapezoidal shape in a plan view, the degree of adhesion with pin holes of a tire is variable. Therefore, when a force is applied from the road surface via an edge of the body, the stud pin is likely to fall out of a pin hole. Accordingly, the upper-end periphery of the body is not expected to exert a sufficient edge effect on a road surface.

A object of the present invention is to provide: a stud pin which has excellent resistance to falling out of a pin hole and is capable of exerting a sufficient edge effect through its body on a road surface; and a pneumatic tire comprising the stud pin.

### SOLUTION TO PROBLEM

As means for solving the above-described problem, the present invention provides a stud pin mounted in a pin hole of a pneumatic tire, the stud pin comprising: a body which is cylindrical and is constituted by an edge, whose at least one end of a center axis direction extends in parallel to a straight line perpendicular to the center axis, and an arc-shaped part centered on the center axis; and a base arranged on the other end of the center axis direction of the body, which base comprises a linear part extending in parallel to the edge on the outer periphery and is formed asymmetrically about a transverse axis perpendicular to the center axis, wherein the edge and the linear part are arranged perpendicular to a circumferential direction of the pneumatic tire.

According to this constitution, in a state where the stud pin is mounted in a pin hole of a tire, the arc-shaped part tightly adheres to the inner surface of the pin hole, and the retention state can thereby be stabilized. Further, the linear part of the base can effectively inhibit displacement in the rotational direction. The edge and the linear part are arranged perpendicular to the tire circumferential direction. This enables the edge to sufficiently exert an edge effect, particularly traction performance at the start of driving or braking performance during braking.

The base preferably has a greater length in the longitudinal axis direction perpendicular to the center axis than in the transverse axis direction perpendicular to the center axis and the longitudinal axis.

By this constitution, sufficient retainability can be maintained against a force acting in the longitudinal axis direction.

It is preferred that the base be constituted by a first region and a second region that are divided by the transverse axis in a plan view, and that the outer periphery of the first region comprise inclined parts that are inclined toward the longitudinal axis from the respective sides of the transverse axis direction.

By this constitution, sufficient retainability can be maintained against a force acting in the longitudinal axis direction.

The outer periphery of the second region preferably has a linear part parallel to the transverse axis.

The body preferably has a tapered surface on the upper-end periphery.

According to this constitution, when driving on a dry road surface, the tapered surface is the part of the body that collides with the road surface, so that the impact force that acts on the road surface in this process can be mitigated. Therefore, the occurrence of road surface cracking and the like can be suppressed.

The base is preferably formed in such a manner to extend from the body in its whole circumference in a plan view.

By this constitution, the retainability attributed to the base can be improved.

As another means for solving the above-described problem, the present invention provides a pneumatic tire comprising: a stud pin having any one of the above-described constitutions; and pin holes which are formed on a tread portion and in which the stud pin is mounted.

### ADVANTAGEOUS EFFECTS OF INVENTION

According to the present invention, an arc-shaped part is formed on the body; therefore, the mounted state of the stud pin in a pin hole of a tire can be stabilized. Since not only an edge is formed on the body and a linear part is formed on the base but also the edge and the linear part are both arranged perpendicular to the tire circumferential direction, a sufficient edge effect can be exerted at the start of driving or during braking.

### Brief Description of Drawings

FIG. 1 is a perspective view illustrating a stud pin according to one embodiment of the present invention.
FIG. 2 is a front view of the stud pin illustrated in FIG. 1.
FIG. 3 is a plan view of the stud pin illustrated in FIG. 1.
FIG. 4 is a developed view of a tread portion of a tire on which the stud pin illustrated in FIG. 1 is mounted.
FIG. 5 is a cross-sectional view of one of the pin holes illustrated in FIG. 4.
FIG. 6 is a plan view illustrating a stud pin according to another embodiment.

### DESCRIPTION OF EMBODIMENTS

Embodiments of the present invention will now be described referring to the attached drawings. In the following descriptions, terms each indicating a specific direction or position (e.g., terms including "upper", "lower", "side", "end") are used as necessary. These terms are used to facilitate the understanding of the invention with reference to the drawings, and the technical scope of the present invention should not be limited by the meanings of these terms. Further, the descriptions provided below are essentially nothing but exemplifications of the present invention and are not intended to limit the present invention, its application, or its use. Moreover, the drawings are schematic, and the dimensional ratios and the like differ from the actual ones.

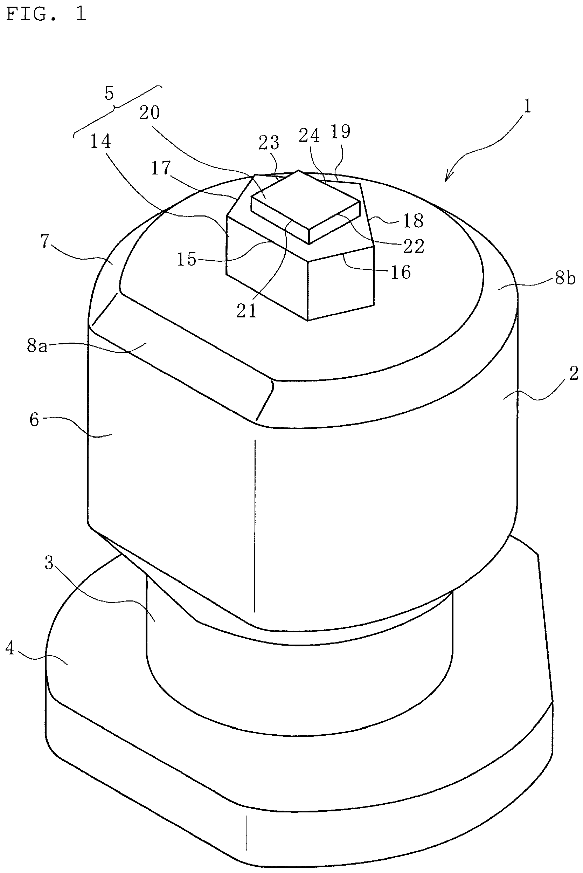

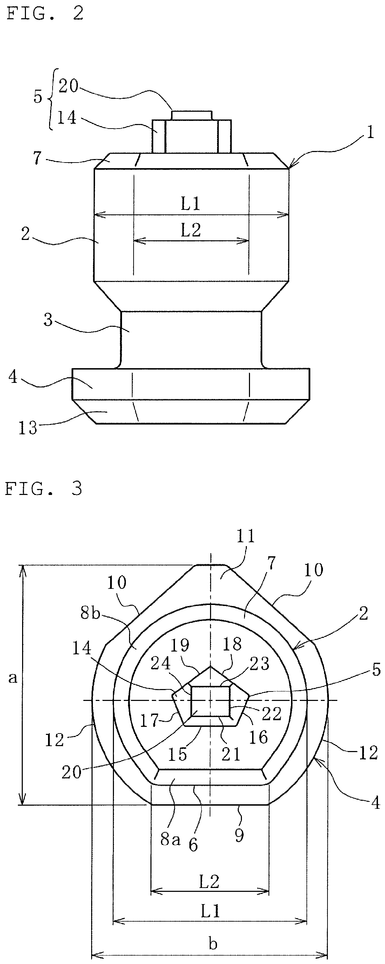

FIGs. 1 and 2 illustrate a stud pin 1 according to one embodiment of the present invention. The stud pin 1 is formed by, for example, molding aluminum, an aluminum alloy or the like, and is constituted by: a body 2; a shank 3 extending on a lower side of the body 2; a base 4 further extending on a lower side of the shank 3, and a shaft 5 arranged on a center part of the upper surface of the body 2.

The body 2 is substantially cylindrical; however, a side surface 6, which is parallel to the center axis, is formed on a part of the outer circumferential surface. By this, at least on an upper-end periphery of the body 2, a body side edge 8a, which is parallel to a straight line perpendicular to the center axis, and other arc-shaped part 8b are formed.

The upper-surface periphery of the body 2 is constituted by a tapered surface 7. The tapered surface 7 is a region that initially comes into contact with the road surface when a pneumatic tire (stud tire) on which the stud pin 1 is mounted is driven on a road. In this embodiment, the tapered surface 7, which is formed on the body side edge 8a, is the region that initially collides with the road surface. Accordingly, the tapered surface 7 makes a surface contact when the body side edge 8a collides with the road surface. It is noted here, however, that the term "tapered surface 7" used herein is construed to encompass a slightly curved surface shape as long as a pointed part thereof can be prevented from colliding with the road surface. Further, the arc-shaped part 8b encompasses not only a circular arc but also a part of a polygonal shape connected by plural line segments. It is noted here that the length of each line segment is shorter than the body side edge 8a.

Moreover, in the body 2, a diameter L1 of the cylindrical portion and a length L2 of the body side edge 8a in a plan view are set such they satisfy a relationship 1/4 < L2/L1 < 3/4. At an L2/L1 value of 1/4 or less, the body 2 has an excessively high partial contact pressure upon contact with the ground, whereas at an L2/L1 value of 3/4 or larger, the body 2 is likely to be damaged upon contact with the ground.

As illustrated in FIG. 3, the base 4 is formed in a longitudinally elongated shape whose maximum length "a" in the longitudinal direction and maximum length "b" in the transverse direction satisfy a > b in a plan view. On one end of the longitudinal direction of the base 4, a linear part 9 parallel to the side surface 6 of the body 2 is formed. Further, in the base 4, a protruding part 11 which protrudes in a triangular shape is formed by two inclined parts 10 on the opposite side from the linear part 9. In this embodiment, the protruding part 11 is bilaterally symmetrical about a longitudinal center line. In addition, an angle formed by each inclined part 10 with the longitudinal center line is set to be smaller than 90°. This angle is particularly preferably 45°. The two parts connecting the linear part 9 and the respective inclined parts 10 constitute arc-shaped parts 12. These parts are all connected via arc-shaped surfaces such that no edge is formed therebetween. On the lower surface of the outer periphery of the base 4, a tapered surface 13 is formed.

The shape of the base 4 is not restricted to the one described above, and the base 4 may take various forms such as a circular shape and a polygonal shape, as long as the base 4 extends to the outer side than the body 2 in a plan view.

The shaft 5 comprises a first protrusion 14 which has an odd-numbered polygonal shape in a plan view (a pentagonal shape in this case). A first edge 15, which includes one side (edge) of the first protrusion 14, is a plane surface that is parallel to the side surface 6 of the body 2. The length of the first edge 15 is set to be shorter than the length of a body side edge 8a. A second edge 16 and a third edge 17, which are adjacent to the first edge 15 on the respective sides thereof, face the arc-shaped part of the base 4. Further, a fourth edge 18 adjacent to the second edge 16 and a fifth edge 19 adjacent to the third edge 17 face the respective inclined parts 10 of the base 4.

On the upper surface of the first protrusion 14, a second protrusion 20 is formed. The second protrusion 20 has a rectangular shape in a plan view, and one of its long sides constitutes a sixth edge 21, which is parallel to the first edge 15 of the first protrusion 14. It is noted here that other edges of the second protrusion 20 (a seventh edge 22, an eighth edge 23, and a ninth edge 24) extend in different directions from the other edges of the first protrusion 14.

The shaft 5 is arranged such that its center axis is aligned with the center axis of the body 2. By this, a sufficient distance can be ensured between the outer periphery of the body 2 and the shaft 5 in all directions. In addition, the second protrusion 20 has a smaller number of edges than the first protrusion 14. Specifically, the first protrusion 14 has five edges, while the second protrusion 20 has four edges. Moreover, in this embodiment, the height of the shaft 5 is 0.5 mm to 2.5 mm. The reason for this is that the shaft 5 cannot sufficiently exert its functions at a height of less than 0.5 mm, and the shaft 5 contacts the ground before the body 2 and is thus likely to be damaged at a height of greater than 2.5 mm. Furthermore, the height ratio of the second protrusion 20 with respect to the first protrusion 14 is set to be 10% to 80%. The edge effect of the second protrusion 20 is insufficient when the height ratio is lower than 10%, and the first protrusion 14 cannot sufficiently exert an edge effect when the height ratio is higher than 80%.

By configuring the shaft 5 to have two steps in this manner, the total edge length can be increased, so that a sufficient edge effect can be exerted. In addition, since the edges of the first and the second protrusions 14 and 20 that extend in various directions collide with the road surface, an edge effect can be exerted not only in a straight direction but also in various directions during cornering and the like. It is noted here that the shaft 5 may be constituted by three or more steps as well.

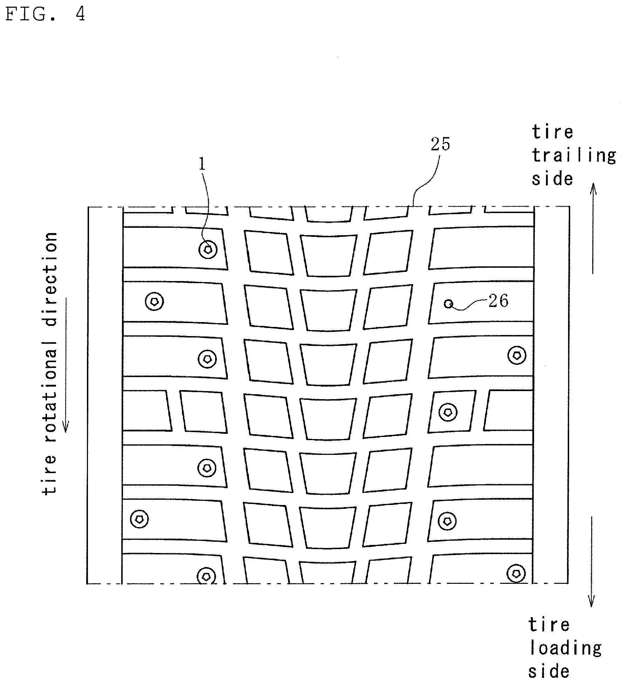

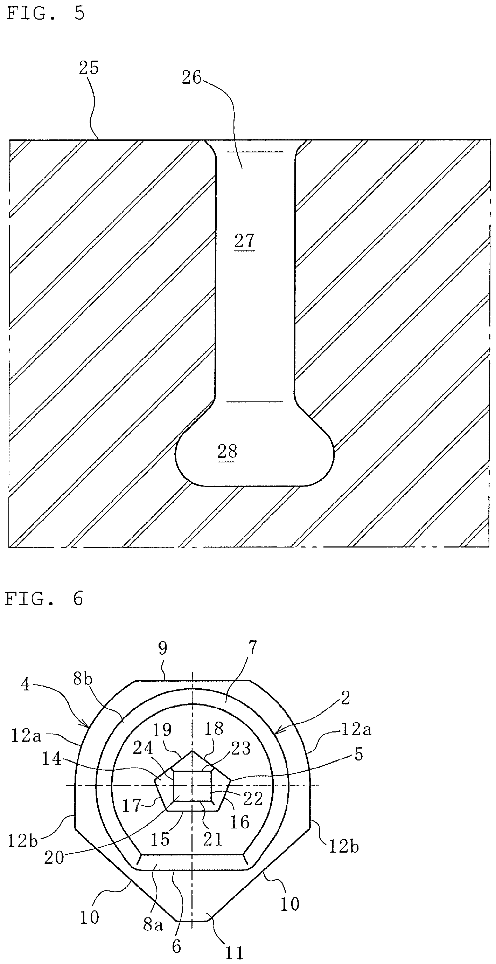

As illustrated in FIG. 4, the stud pin 1 having the above-described constitution is used by being mounted into the pin holes 26 formed on a tread portion 25 of a stud tire. As illustrated in FIG. 5, the pin holes 26 are each constituted by a small-diameter part 27 having the same inner diameter and a large-diameter part 28 on the tip thereof. An operation of mounting the stud pin 1 into each pin hole 26 is automatically performed by a pin driving device (not illustrated). In this case, the base 4 has the above-described longitudinally elongated heterogeneous shape, not a point-symmetrical shape such as a circular shape; therefore, the orientation of the stud pin 1 can be easily understood and the stud pin 1 can thus be accurately mounted into each pin hole 26. In this embodiment, the side surface 6 of the body 2 (first side surface of the shaft 5) is positioned on the tire trailing side such that it extends in the tire widthwise direction perpendicular to the tire circumferential direction. In this state, a part of the stud pin 1 above the upper end (tapered surface 7) of the body 2 is exposed from the surface of the tread portion 25.

According to the stud pin 1 mounted on a tire in this manner, during driving, the body side edge 8a constituting an upper-end part of the body 2 initially collides with the road surface. The body side edge 8a has sufficient length and area. Therefore, even when the body side edge 8a collides with the road surface, the impact force applied per unit area of the road surface can be reduced. As a result, problems such as road surface cracking can be avoided even when driving on a dry road surface. Further, when driving on a frozen road surface (icy surface), the body side edge 8a bites into the road surface to exert an excellent driving force.

The shaft 5 subsequently collides with the road surface. In this case, a sufficient distance is secured between the body 2 and the shaft 5. Therefore, the shaft 5 is prevented from colliding with the road surface before the body 2. As a result, damage to the shaft 5 caused by collision with the road surface can be inhibited.

The shaft 5 that collides with the road surface is constituted by two steps, and the first protrusion 14 and the second protrusion 20 have different directions of surrounding pointed sides except at one spot. Therefore, the edge effect of the shaft 5 can be sufficiently exerted. In other words, in straight driving, the fourth edge 18 and the fifth edge 19 of the first protrusion 14 and the vertex where these edges intersect with each other, as well as the eighth edge 23 of the second protrusion 20 and the first edge 15, act on the road surface (icy surface). Further, when cornering a curve, the second edge 16 or the third edge 17 of the first protrusion 14 and the seventh edge 22 or the ninth edge 24 of the second protrusion 20 inhibit skidding on the road surface. Moreover, when the brake is applied, the first edge 15 of the first protrusion 14 and the sixth edge 21 of the second protrusion 20 as well as the fourth edge 18 and the fifth edge 19 apply a braking force against the road surface.

In these processes, a force that causes the stud pin 1 to fall out of the pin hole 26 acts on the stud pin 1 through the body 2 and the shaft 5. The stud pin 1 comprises the shank 3 having a smaller diameter than the body 2 and the base 4 having a larger diameter than the body 2 connected to the shaft 5, so that dislodgement of the stud pin 1 is effectively inhibited.

### EXAMPLES

Using the stud pin of Comparative Example, whose body 2 and base 4 have circular shapes in a plan view, as well as the stud pin of Example that is illustrated in FIGs. 1 to 3, the fall-off resistance and the edge performance were tested. As test tires, tires having a size of 195/65R15 and an air pressure Fr/Re of 220/220 (kPa) were used. In the fall-off resistance test, a wire was connected to the stud pin 1 mounted in a pin hole 26 and pulled in the front-back, oblique and lateral directions at a constant rate. The tensile force was gradually increased, and the fall-off resistance was evaluated in terms of the tensile force applied when the stud pin 1 was pulled out of the pin hole 26. In the edge performance test, the test tires were mounted on a test vehicle (1,500 cc, 4WD midsize sedan), and this test vehicle was driven on an icy road surface to evaluate the edge performance (drive performance, braking performance and turning (cornering) performance). For the evaluation of the edge performance, Examples 1 to 9 were each evaluated as an index, taking the edge performance of Comparative Example 1 as 100. The drive performance was evaluated in terms of the elapsed time required for the driving distance to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

The evaluation results are as shown in Table 1.

**[Table 1]**

| | Comparative Example | Example |
|---|---|---|
| Shaft cross-sectional shape | | |
| First step | circular | pentagonal |
| Second step | circular | quadrangular |
| Fall-off resistance | | |
| Longitudinal axis direction | 100 | 106 |
| Oblique direction | 100 | 104 |
| Transverse axis direction | 100 | 100 |
| Drive performance | 100 | 103 |
| Braking performance | 100 | 105 |
| Turning performance | 100 | 103 |

As shown above, in Example, the fall-off resistance was improved in all directions except the transverse direction by the base 4 having a longitudinally elongated asymmetrical shape. In addition, by the body side edge 8a formed on the body 2 and the edges formed on the shaft 5, excellent effects were exerted in all of the items of the edge effect. These edge effects were attained because the formation of the body side edge 8a on the body 2 and the two-step configuration of the shaft 5 enabled to freely set the directions of the edges and to increase the lengths of the edges.

It is noted here that the present invention is not limited to the constitutions of the above-described embodiment, and a variety of modifications can be made.

In the above-described embodiment, the body side edge 8a is arranged on the tire trailing side such that it extends perpendicular to the tire circumferential direction along the tire widthwise direction; however, the body side edge 8a may be arranged on the tire leading side as well. This makes it easier for the body side edge 8a to exert a braking force.

In the above-described embodiment, the body side edge 8a of the body 2 and the linear part 9 of the base 4 are arranged in one of the regions divided in the longitudinal axis direction by the transverse axis; however, they may be arranged on the opposite sides as well.

### DESCRIPTION OF SYMBOLS

- 1:: stud pin
- 2:: body
- 3:: shank
- 4:: base
- 5:: shaft
- 6:: side surface
- 7:: tapered surface
- 8a:: body side edge (edge)
- 8b:: arc-shaped part
- 9:: linear part
- 10:: inclined part
- 11:: protruding part
- 12:: arc-shaped part
- 13:: tapered surface
- 14:: first protrusion
- 15:: first edge
- 16:: second edge
- 17:: third edge
- 18:: fourth edge
- 19:: fifth edge
- 20:: second protrusion
- 21:: sixth edge
- 22:: seventh edge
- 23:: eighth edge
- 24:: ninth edge
- 25:: tread portion
- 26:: pin hole
- 27:: small-diameter part
- 28:: large-diameter part

## Claims

1. A stud pin mounted in a pin hole of a pneumatic tire, the stud pin comprising:
a body which is cylindrical and is constituted by an edge, whose at least one end of a center axis direction extends in parallel to a straight line perpendicular to the center axis, and an arc-shaped part centered on the center axis; and
a base arranged on the other end of the center axis direction of the body, which base comprises a linear part extending in parallel to the edge on the outer periphery and is formed asymmetrically in a longitudinal axis direction about a transverse axis perpendicular to the center axis,
wherein the edge and the linear part are arranged perpendicular to a circumferential direction of the pneumatic tire.

2. The stud pin according to claim 1, wherein the base has a greater length in the longitudinal axis direction perpendicular to the center axis than in the transverse axis direction perpendicular to the center axis and the longitudinal axis.

3. The stud pin according to claim 1 or 2, wherein
the base is constituted by a first region and a second region that are divided by the transverse axis in a plan view, and
the outer periphery of the first region comprises inclined parts that are inclined toward the longitudinal axis from the respective sides of the transverse axis direction.

4. The stud pin according to claim 3, wherein the outer periphery of the second region comprises a linear part parallel to the transverse axis.

5. The stud pin according to any one of claims 1 to 4, wherein the body comprises a tapered surface on the upper-end periphery.

6. The stud pin according to any one of claims 1 to 5, wherein the base is formed in such a manner to extend from the body in its whole circumference in a plan view.

7. A pneumatic tire comprising:
the stud pin according to any one of claims 1 to 6; and
pin holes which are formed on a tread portion and in which the stud pin is mounted.
